# EUROPÄISCHE PATENTSCHRIFT

(11) **EP 3 640 123 B1**
(45) Veröffentlichungstag und Bekanntmachung des Hinweises auf die Patenterteilung: **14.08.2024**
(21) Anmeldenummer: 19214480.6
(22) Anmeldetag: 19.04.2013
(51) Int. Cl.: B62D 21/02, B60R 16/04, B60R 19/48

(54) **RAHMENTRAGSTRUKTUR MIT EINEM AUFNAHMEBEHÄLTNIS FÜR ZUMINDEST EINE NUTZFAHRZEUGKOMPONENTE**
FRAME SUPPORT STRUCTURE COMPRISING A RECEPTACLE FOR AT LEAST ONE COMMERCIAL VEHICLE COMPONENT
STRUCTURE DE SUPPORT DE CADRE DOTÉE D'UN RÉCIPIENT DE COLLECTE POUR AU MOINS UN COMPOSANT DE VÉHICULE UTILITAIRE

(30) Priorität: 26.09.2012 DE 102012019023
(43) Veröffentlichungstag der Anmeldung: 22.04.2020
(62) Teilanmeldung aus: 13002063.9
(73) Patentinhaber: MAN Truck & Bus SE, 80995 München (DE)
(72) Erfinder: Grimm, Thomas, 80339 München (DE); Fissmann, Tobias, 81543 München (DE); Braun, Reimar, 81735 München (DE); von Esebeck, Götz, 15831 Blankenfelde-Mahlow (DE)
(74) Vertreter: v. Bezold & Partner Patentanwälte - PartG mbB

(56) Entgegenhaltungen:
- EP-A1- 0 591 718
- EP-A1- 1 577 143
- EP-A2- 1 334 881
- EP-B1- 0 591 718
- EP-B1- 1 577 143
- EP-B1- 2 532 567
- WO-A1-2007/045365
- DE-A1- 10 108 713
- DE-A1- 102008 045 924
- DE-A1- 102012 000 812
- DE-A1- 19 813 189
- DE-B4- 10 108 713

## Beschreibung

Die Erfindung betrifft eine Rahmentragstruktur, insbesondere ein Fahrgestell, für ein Nutzfahrzeug, vorzugsweise einen Lastkraftwagen, insbesondere eine Sattelzugmaschine, mit einem Aufnahmebehältnis für zumindest eine Nutzfahrzeugkomponente.

Zum Stand der Technik kann z. B. verwiesen werden auf die EP 1 577 143 A1, die EP 0 591 718 A1, die DE 101 08 713 A1 und die EP 1 334 881 A2. Aus WO 2007/045365 A1 ist ein Fahrgestellrahmen bekannt, der zwei Längsträger, mindestens einen ersten und einen zweiten Querträger zwischen den beiden Längsträgern, und einen Batteriekasten umfasst, der am hinteren Ende des Fahrzeugs zwischen den Trägern mit Schwingungsdämpfungs-Befestigungsmitteln angeordnet ist. Das Befestigungsmittel des Batteriekastens umfasst vordere Befestigungsmittel zum Verbinden der Vorderseite des Batteriekastens mit dem ersten benachbarten Querträger und hintere Befestigungsmittel zum Verbinden der Rückseite des Batteriekastens mit dem zweiten benachbarten Querträger. Aus DE 10 2012 000812 A1 z. B. ist ein Nutzkraftwagen bekannt, insbesondere eine Sattelzugmaschine, mit wenigstens einem Elektromotor, mittels welchem der Nutzkraftwagen antreibbar ist, mit wenigstens einer elektrischen Speichereinrichtung zum Speichern von elektrischer Energie, mittels welcher der Elektromotor zum Antreiben des Nutzkraftwagens mit der elektrischen Energie versorgbar ist, und mit einem Rahmen, welcher wenigstens zwei in Fahrzeugquerrichtung voneinander beabstandete und miteinander verbundene Längsträgerelemente umfasst, wobei die elektrische Speichereinrichtung in Fahrzeugquerrichtung zwischen den Längsträgerelementen angeordnet ist und hinter der hintersten Hinterachse des Nutzkraftwagens angeordnet ist.

Aus DE 10 2011 109 025 A1 ist eine Rahmentragstruktur für einen Lastkraftwagen bekannt. Die Rahmentragstruktur umfasst zwei Längsträger, die in Querrichtung der Rahmentragstruktur voneinander beabstandet sind, und mehrere Querträger, die die Längsträger miteinander verbinden. Zudem umfasst die Rahmentragstruktur eine Aufnahmebox für eine Hochvoltbatterie, die seitlich außen an einem der Längsträger und zugleich vor einer Hinterachse des Lastkraftwagens angeordnet ist. In Abhängigkeit der Lastkraftwagenkonfiguration kann aber das Erfordernis auftauchen, den von der Aufnahmebox beanspruchten Bauraum für andere Lastkraftwagenkomponenten zu nutzen (z.B. für einen Kraftstofftank, der somit zur Reichweitenvergrößerung größer ausgeführt werden kann) oder eine größere Aufnahmebox für eine größere Batterie oder mehrere Batterien vorzusehen, was aber aufgrund enger Platzverhältnisse nicht immer ohne Weiteres möglich ist. Zudem führt die Montage der Aufnahmebox seitlich außen an dem Längsträger zu einer außermittigen Beanspruchung desselben, was insbesondere während der Fahrt des Lastkraftwagens und der damit einhergehenden Schwingungsanregung nachteilhaft sein kann.

Eine Aufgabe der Erfindung ist es, eine alternative und/oder verbesserte Rahmentragstruktur für ein Nutzfahrzeug mit einem Aufnahmebehältnis zu schaffen, insbesondere einen alternativen Bauraum für das Aufnahmebehältnis vorzusehen.

Diese Aufgabe wird mit den Merkmalen des Hauptanspruchs gelöst. Vorteilhafte Weiterbildungen der Erfindung sind den Unteransprüchen zu entnehmen.

Erfindungsgemäß wird eine Rahmentragstruktur, vorzugsweise ein Fahrgestell, für ein Nutzfahrzeug, insbesondere einen Lastkraftwagen (z.B. eine Sattelzugmaschine, ein Verteiler-Lastkraftwagen, etc.) geschaffen. Die Rahmentragstruktur umfasst zumindest ein Aufnahmebehältnis für zumindest eine Nutzfahrzeugkomponente (z.B. eine Hybridkomponente für das Nutzfahrzeug, eine Batterie, eine Hochvoltbatterie für einen Hybridantrieb des Nutzfahrzeugs, eine Starterbatterie, etc.), zwei Längsträgerkonstruktionen, die zweckmäßig in Querrichtung der Rahmentragstruktur voneinander beabstandet sind, eine Hinterachse für das Nutzfahrzeug, und einen Schlussquerträger, der zweckmäßig hinter der Hinterachse für das Nutzfahrzeug angeordnet ist und/oder über den die zwei Längsträgerkonstruktionen vorzugsweise miteinander verbunden sind. Zudem kann die Rahmentragstruktur mit einer Vorderachse versehen sein.

Die erfindungsgemäße Rahmentragstruktur zeichnet sich insbesondere dadurch aus, dass das Aufnahmebehältnis hinter der Hinterachse angeordnet ist und somit zweckmäßig Bauraum hinter der Hinterachse nutzt. Dadurch kann der Bauraum vor der Hinterachse anderweitig genutzt werden. Zudem kann z.B. eine günstige Achslastverteilung und/oder eine einfache Zugänglichkeit auf eine an der Rahmentragstruktur montierte Starterbatterie ermöglicht werden.

Das Aufnahmebehältnis dient vorzugsweise zur Aufnahme einer oder mehrerer Hybridkomponenten für das Nutzfahrzeug (z.B. einer Batterie, einer Hochvoltbatterie, eines Batteriesystems aus mehreren Speichermodulen, nebst zugehörigen Elektronikkomponenten, eines Sekundärkühlkreislaufs (z.B. Wasserpumpe, Radiator und/oder Lüfter), eines Boardnetzladewandlers und/oder von Leistungselektronik), um zweckmäßig ein Hybridmodul zu bilden. Das Aufnahmebehältnis selbst kann z.B. als Aufnahmegehäuse, gitterrahmenförmiges oder vollwandiges Aufnahmebehältnis oder in Form einer anderen geeigneten Aufnahme-/Tragestruktur vorgesehen werden.

Vorzugsweise ist das Aufnahmebehältnis zumindest abschnittsweise entlang des Schlussquerträgers angeordnet. Alternativ oder ergänzend kann das Aufnahmebehältnis aber auch zumindest abschnittsweise entlang zumindest einer der zwei Längsträgerkonstruktionen angeordnet sein (z.B. seitlich außerhalb, seitlich innerhalb, darauf und/oder darunter).

Das Aufnahmebehältnis ist zumindest abschnittsweise unter dem Schlussquerträger, nämlich unter dessen Unterseite, angeordnet. Ebenso kann das Aufnahmebehältnis zumindest abschnittsweise über dem Schlussquerträger (insbesondere über dessen Oberseite) angeordnet sein.

Es ist möglich, dass das Aufnahmebehältnis zumindest abschnittsweise vor der Vorderseite des Schlussquerträgers oder zumindest abschnittsweise vor der Hinterseite des Schlussquerträgers angeordnet ist. Das Aufnahmebehältnis kann zudem so angeordnet sein, dass es vollständig vor der Hinterseite des Schlussquerträgers verläuft und sich somit nicht über die Hinterseite des Schlussquerträgers nach hinten hinaus erstreckt. Das Aufnahmebehältnis kann sogar so angeordnet sein, dass es vollständig vor der Vorderseite des Schlussquerträgers verläuft und sich somit nicht über die Vorderseite des Schlussquerträgers nach hinten hinaus erstreckt.

Alternativ oder ergänzend kann das Aufnahmebehältnis sogar zumindest abschnittsweise innerhalb des Schlussquerträgers angeordnet sein. Zu diesem Zweck kann der Schlussquerträger z.B. im Wesentlichen U-profilförmig ausgeführt sein.

Die Ausführungsformen, in denen das Aufnahmebehältnis vorzugsweise vollständig vor der Hinterseite und/oder vor der Vorderseite des Schlussquerträgers angeordnet sind, weisen insbesondere den Vorteil auf, dass der Schlussquerträger selbst als Crash-Schutzstruktur für das Aufnahmebehältnis dienen kann.

Die Erfindung umfasst aber auch Ausführungsformen, in denen die Rahmentragstruktur mit einer zusätzlichen Crash-Schutzstruktur versehen ist, die das Aufnahmebehältnis vor einem Aufprall schützt.

Die Crash-Schutzstruktur umfasst ein Querträgerelement, das sich in Querrichtung der Rahmentragstruktur erstreckt, hinter dem Aufnahmebehältnis verläuft und zumindest abschnittsweise unterhalb des Niveaus des Schlussquerträgers angeordnet ist.

Zudem kann die Crash-Schutzstruktur zusätzlich zu dem Querträgerelement zwei Seitenelemente umfassen, die als Seitenaufprallschutz für das Aufnahmebehältnis dienen und zusammen mit dem Querträgerelement eine im Wesentlichen U-förmige Gestalt bilden.

Es ist möglich, dass das Aufnahmebehältnis über zumindest ein Dämpfungselement mit dem Schlussquerträger und/oder zumindest einer der zwei Längsträgerkonstruktionen verbunden ist. Das Dämpfungselement dient dazu, eine Schwingungs- und/oder Stoßbeanspruchung auf das Aufnahmebehältnis während der Fahrt des Nutzfahrzeugs zu reduzieren.

Vorzugsweise ist das Aufnahmebehältnis an einer Unterseite des Schlussquerträgers montiert.

Es ist möglich, dass die Längsträgerkonstruktionen nach hinten verlängert sind, um Bauraum für das Aufnahmebehältnis zu schaffen, insbesondere hinter der Hinterachse und vor dem Schlussquerträger. Es ist möglich, dass der Schlussquerträger zweckmäßig an seinen beiden Seitenenden mit jeweils einer Seitenarmkonstruktion versehen ist, die als Teil, insbesondere als Verlängerung, der Längsträgerkonstruktionen dienen kann. Vorzugsweise stehen die Seitenarmkonstruktionen von dem Querträger nach vorne vor und sind zudem mit den zwei Längsträgerkonstruktionen verbunden, um so zweckmäßig als Verlängerungen der zwei Längsträgerkonstruktionen zu wirken. Alternativ oder ergänzend stehen die Seitenarmkonstruktionen von dem Querträger nach hinten ab und sind mit dem Querträgerelement der Crash-Schutzstruktur verbunden, um zweckmäßig als Teil der Crash-Schutzstruktur zu wirken.

Das Aufnahmebehältnis erstreckt sich abschnittsweise seitlich außerhalb und vorzugsweise seitlich innerhalb der zwei Längsträgerkonstruktionen und verläuft zugleich z.B. unter denselben.

Es ist möglich, dass das Aufnahmebehältnis so ausgebildet und angeordnet ist, dass sein Eigengewicht, z.B. direkt oder indirekt, zu im Wesentlichen gleichen Teilen auf die zwei Längsträgerkonstruktionen übertragen wird. Dadurch kann eine einseitige (z.B. ungleiche) Belastung der Rahmentragstruktur, insbesondere der zwei Längsträgerkonstruktionen vermieden werden.

Des Weiteren kann sich das Aufnahmebehältnis zumindest über die gesamte Längserstreckung des Schlussquerträgers erstrecken und somit zweckmäßig zumindest gleich lang sein wie der Schlussquerträger.

Es ist möglich, dass der Schlussquerträger mit Seitenarmkonstruktionen versehen ist, die mit den Längsträgerkonstruktionen verbunden sind und als Verlängerung der Längsträgerkonstruktionen wirken, und der Schlussquerträger, die Seitenarmkonstruktionen und die Crash-Schutzstruktur eine Baueinheit bilden.

Die Längsträgerkonstruktionen sind z.B. als U-Profilträger ausgeführt, können aber auch zum Beispiel als I-Profilträger, Hohlprofilträger, L-Profilträger oder als Blechkonstruktionen oder in Form anderer geeigneter Tragstrukturen ausgeführt sein. Die jeweilige Längsträgerkonstruktion kann aus einem einzigen Trägerelement oder mehreren miteinander verbundenen (z.B. verschweißten, verschraubten, vernieteten, etc.) Trägerelementen ausgebildet sein. Der Schlussquerträger kann z.B. als herkömmlicher U-Profilträger, L-Profilträger, I-Profilträger oder Hohlprofilträger oder als Blechkonstruktion oder in Form einer anderen geeigneten Tragstruktur ausgeführt sein.

Zu erwähnen ist, dass die Merkmale "vor/vorne" und "hinter/hinten" vorzugsweise so zu verstehen sind, dass sie eine Positionierung in Längsrichtung der Rahmentragstruktur bzw. des Nutzfahrzeugs definieren, während eine Positionierung in Höhen- und/oder Querrichtung der Rahmentragstruktur bzw. des Nutzfahrzeugs nicht eingeschränkt wird, es sei denn, eine Positionierung in Höhen- und/oder Querrichtung wird ausdrücklich spezifiziert. Zudem beziehen sich zweckmäßig die Merkmale "vor/vorne" auf die Frontseite und die Merkmale "hinten/hinter"" auf die Heckseite der Rahmentragstruktur bzw. des Nutzfahrzeugs.

Zu erwähnen ist außerdem, dass die Rahmentragstruktur mit einer einzigen Hinterachse oder mehreren Hinterachsen (z.B. einer Doppel- oder Tandemhinterachsanordnung) ausgestattet sein kann, die z.B. einzelbereift oder zwillingsbereift sein können.

Zu erwähnen ist noch, dass das Aufnahmebehältnis im Rahmen der Erfindung nicht auf ein einziges Aufnahmebehältnis beschränkt ist, sondern auch mehrere separate Aufnahmebehältnisse umfassen kann.

Die Erfindung umfasst außerdem ein Nutzfahrzeug, vorzugsweise einen Lastkraftwagen, insbesondere eine Sattelzugmaschine oder einen Verteiler-Lastkraftwagen, mit einer Rahmentragstruktur wie hierin beschrieben.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Ansicht eines Teils einer Rahmentragstruktur für ein Nutzfahrzeug gemäß einer Ausführungsform der Erfindung,
- Figur 2: zeigt eine Ansicht von oben eines Teils der Rahmentragstruktur der Figur 1,
- Figur 3: zeigt eine Seitenansicht eines Teils der Rahmentragstruktur der Figuren 1 und 2,
- Figur 4: zeigt eine Hinteransicht der Rahmentragstruktur der Figuren 1-3,
- Figur 5: zeigt eine schematische Querschnittsansicht eines Schlussquerträgers und eines Aufnahmebehältnisses gemäß einer Ausführungsform der Erfindung,
- Figur 6: zeigt eine schematische Querschnittsansicht eines Schlussquerträgers und eines Aufnahmebehältnisses gemäß einer anderen Ausführungsform der Erfindung,
- Figur 7: zeigt eine schematische Querschnittsansicht eines Schlussquerträgers und eines Aufnahmebehältnisses gemäß einer wiederum anderen Ausführungsform der Erfindung,
- Figur 8: zeigt eine schematische Querschnittsansicht eines Schlussquerträgers und eines Aufnahmebehältnisses gemäß einer Ausführungsform der Erfindung, und
- Figur 9: zeigt eine schematische Querschnittsansicht eines Schlussquerträgers und eines Aufnahmebehältnisses gemäß einer anderen Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind, und zu deren Erläuterung auch auf die Beschreibung anderer Ausführungsformen oder Figuren verwiesen wird, um Wiederholungen zu vermeiden.

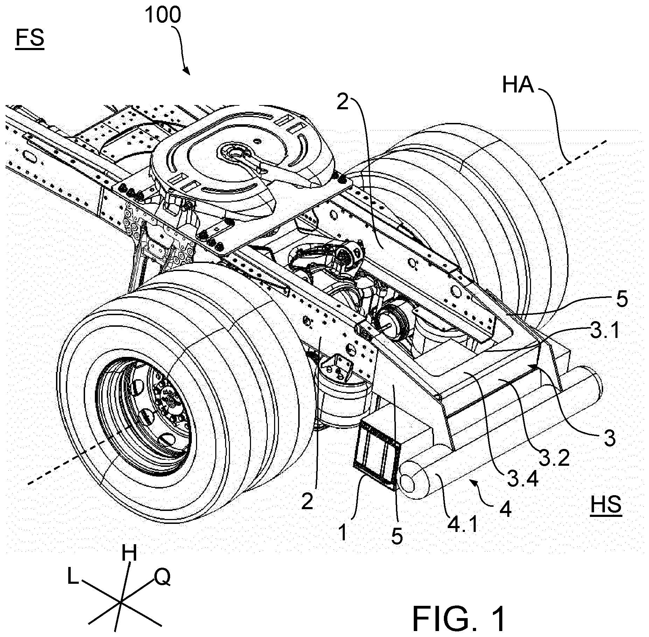

Figur 1 zeigt eine perspektivische Ansicht eines Teils einer Rahmentragstruktur 100 in Form eines Fahrgestells für ein Nutzfahrzeug, insbesondere eine Sattelzugmaschine.

Bezugszeichen L kennzeichnet die Längsrichtung, Bezugszeichen H die Höhenrichtung und Bezugszeichen Q die Querrichtung der Rahmentragstruktur 100 und somit des Nutzfahrzeugs. Bezugszeichen FS kennzeichnet die Frontseite und Bezugszeichen HS die Heckseite der Rahmentragstruktur 100 und somit des Nutzfahrzeugs. "Vor/Vorne" und "Hinten/Hinter" bezieht sich auf die Längsrichtung L. Ferner bezieht sich "Vor/Vorne" auf die Frontseite FS und "Hinten/Hinter" auf die Heckseite HS. Des Weiteren bezieht sich "Unten/Über" auf die Höhenrichtung H.

Die Rahmentragstruktur 100 ist ausgestattet mit einem Aufnahmebehältnis 1 für eine oder mehrere Hybridkomponenten, z.B. einer Batterie, insbesondere einer Hochvoltbatterie, zugehöriger Elektronikkomponenten, einem Boardnetzladewandler, Leistungselektronik, etc. Das Aufnahmebehältnis 1 stellt somit ein Hybridmodul dar.

Die Rahmentragstruktur 100 ist zudem mit einer in Figur 1 nicht zu sehenden Vorderachse und einer Hinterachse HA für das Nutzfahrzeug ausgestattet.

Des Weiteren umfasst die Rahmentragstruktur 100 zwei voneinander beabstandete Längsträgerkonstruktionen 2 und einen Schlussquerträger 3, der eine Vorderseite 3.1, eine Hinterseite 3.2, eine in Figur 1 nicht zu sehende Unterseite 3.3 und eine Oberseite 3.4 aufweist.

Das Aufnahmebehältnis 1 ist hinter der Hinterachse HA angeordnet und erstreckt sich abschnittsweise entlang und unter dem Schlussquerträger 3. Zudem ist das Aufnahmebehältnis 1 so ausgebildet und angeordnet, dass es sich nicht über die Hinterseite 3.2 des Schlussquerträgers 3 nach hinten hinaus erstreckt und somit vollständig vor der Hinterseite 3.2 des Schlussquerträgers 3 verläuft.

Die Rahmentragstruktur 100 ist zudem mit einer Crash-Schutzstruktur 4 versehen, die das Aufnahmebehältnis 1 vor einem Aufprall schützt. Die Crash-Schutzstruktur 4 umfasst insbesondere ein Querträgerelement 4.1, das sich in Querrichtung Q der Rahmentragstruktur 100 erstreckt, hinter dem Aufnahmebehältnis 1 verläuft und zumindest abschnittsweise unterhalb dem Niveau des Schlussquerträgers 3 angeordnet ist. Zudem ist das Querträgerelement 4.1 zur Ausbildung eines Überstands länger ausgeführt als das Aufnahmebehältnis 1, wodurch es zugleich als Seitenaufprallschutz für das Aufnahmebehältnis 1 dienen kann. Die Crash-Schutzstruktur 4 kann zudem zwei nicht gezeigte Seitenelemente umfassen, die als zusätzlicher Seitenaufprallschutz das Aufnahmebehältnis 1 seitlich einfassen können. Das Querträgerelement 4.1 und die zwei Seitenelemente können z.B. eine im Wesentlichen U-förmige Gestalt bilden, um das Aufnahmebehältnis 1 an drei Seiten zu beranden.

Figur 1 zeigt außerdem, dass die zwei Längsträgerkonstruktionen 2 nach hinten verlängert sind, um hinter der Hinterachse HA und vor dem Schlussquerträger 3 Bauraum für das Aufnahmebehältnis 1 zu schaffen. Zu diesem Zweck kann der Schlussquerträger 3 an seinen beiden Seitenenden mit jeweils einer Seitenarmkonstruktion 5 versehen sein, die als Teil und insbesondere als Verlängerung der zwei Längsträgerkonstruktionen 2 betrachtet werden kann.

Die zwei Seitenarmkonstruktionen 5 stehen von dem Querträger 3 nach vorne vor, um als Verlängerungen der zwei Längsträgerkonstruktionen 2 zu wirken, wodurch Bauraum für das Aufnahmebehältnis 1 geschaffen wird. Zugleich stehen die zwei Seitenarmkonstruktionen 5 von dem Querträger 3 nach hinten ab und sind mit dem Querträgerelement 4.1 verbunden, um somit quasi als Teil der Crash-Schutzstruktur 4 wirken zu können.

Wie Figur 1 ferner entnommen werden kann, bilden der Schlussquerträger 3, die zwei Seitenarmkonstruktionen 5 und die Crash-Schutzstruktur 4 eine Baueinheit, die vorzugsweise als Ganzes hinten an die zwei Längsträgerkonstruktionen 2 montierbar und ggf. demontierbar ist.

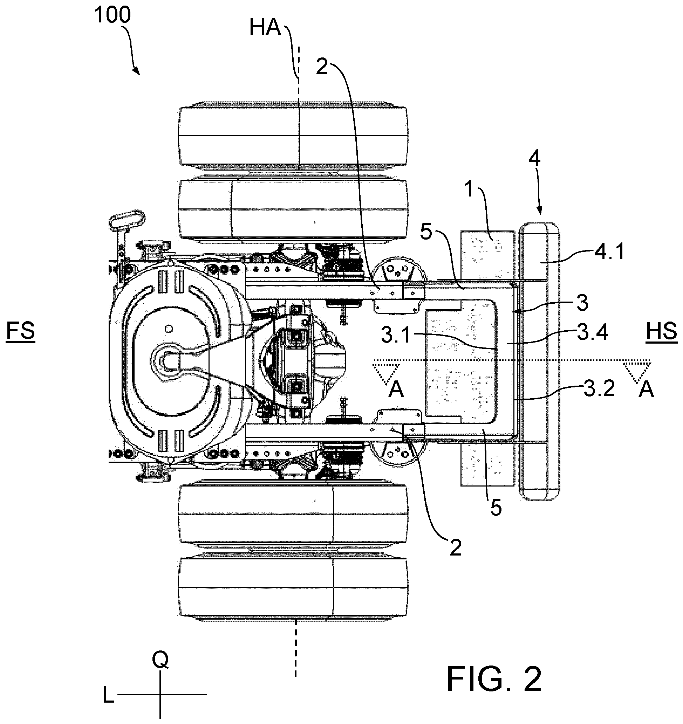

Figur 2 zeigt eine Ansicht von oben auf die Rahmentragstruktur 100 der Figur 1. Figur 2 kann insbesondere entnommen werden, dass das Aufnahmebehältnis 1 hinter der Hinterachse HA, abschnittsweise vor der Vorderseite 3.1 des Schlussquerträgers 3, abschnittsweise hinter der Vorderseite 3.1 des Schlussquerträgers 3 und unter dem Schlussquerträger 3 angeordnet ist und sich zugleich gänzlich vor der Hinterseite 3.2 des Schlussquerträgers 3 erstreckt.

Zudem ist Figur 2 zu entnehmen, dass das Aufnahmebehältnis 1 so ausgebildet und angeordnet ist, dass dessen Eigengewicht über den Schlussquerträger 3 und die Seitenarmkonstruktionen 5 zu im Wesentlichen gleichen Teilen auf die zwei Längsträgerkonstruktionen 2 übertragen wird, wodurch eine einseitige, ungleiche Belastung der zwei Längsträgerkonstruktionen 2 vermieden werden kann.

Des Weiteren kann Figur 2 entnommen werden, dass das Aufnahmebehältnis 1 abschnittsweise seitlich außerhalb und abschnittsweise seitlich innerhalb der zwei Seitenarmkonstruktionen 5 oder allgemein der zwei Längsträgerkonstruktionen 2 angeordnet ist und sich über die gesamte Längserstreckung des Schlussquerträgers 3 erstreckt.

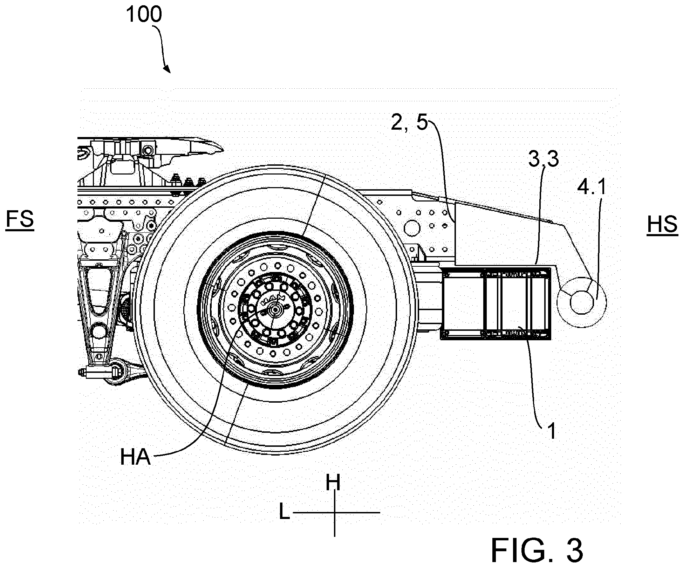

Figur 3 zeigt eine Seitenansicht eines Teils der Rahmentragstruktur 100 der Figuren 1 und 2. Zu sehen ist z.B., dass das Aufnahmebehältnis 1 unter dem durch eine Seitenarmkonstruktion 5 verdeckten Schlussquerträger 3 angeordnet ist und an die Unterseite 3.3 des Schlussquerträgers 3 montiert ist. Figur 3 kann ferner entnommen werden, dass die nach hinten verlängerten Längsträgerkonstruktionen 2 Bauraum zwischen der Hinterachse HA und dem Schlussquerträger 3 für das Aufnahmebehältnis 1 schaffen.

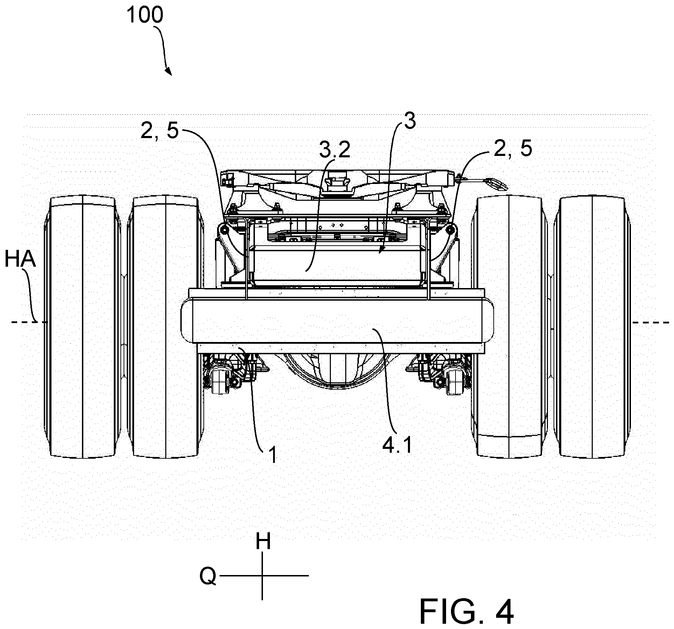

Figur 4 ist eine Hinteransicht der Rahmentragstruktur 100 der Figuren 1-3. Figur 4 kann insbesondere entnommen werden, dass das Aufnahmebehältnis 1 sich entlang des Schlussquerträgers 3 und zugleich seitlich außerhalb der zwei Längsträgerkonstruktionen 2 erstreckt und somit länger ist als der Schlussquerträger 3, aber kürzer als das Querträgerelement 4.1 der Crash-Schutzstruktur 4.

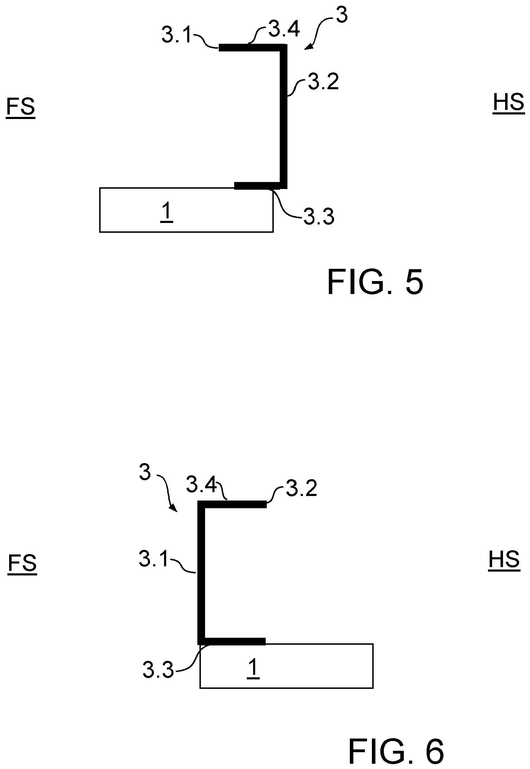

Figur 5 zeigt eine schematische Querschnittsansicht entlang Linie A-A aus Figur 2 eines eine Vorderseite 3.1, eine Hinterseite 3.2, eine Unterseite 3.3 und eine Oberseite 3.4 aufweisenden Schlussquerträgers 3 und eines Aufnahmebehältnisses 1 gemäß einer Ausführungsform der Erfindung. Figur 5 zeigt eine Ausführungsform, in der das Aufnahmebehältnis 1 hinter der Hinterachse HA, unter dem Schlussquerträger 3, vor und hinter der Vorderseite 3.1 des Schlussquerträgers 3 und vollständig vor der Hinterseite 3.2 des Schlussquerträgers 3 angeordnet ist.

Figur 6 zeigt eine schematische Querschnittsansicht entlang Linie A-A aus Figur 2 eines eine Vorderseite 3.1, eine Hinterseite 3.2, eine Unterseite 3.3 und eine Oberseite 3.4 aufweisenden Schlussquerträgers 3 und eines Aufnahmebehältnisses 1 gemäß einer anderen Ausführungsform der Erfindung. Figur 6 zeigt eine Ausführungsform, in der das Aufnahmebehältnis 1 hinter der Hinterachse HA, unter dem Schlussquerträger 3, hinter der Vorderseite 3.1 des Schlussquerträgers 3 und sogar hinter der Hinterseite 3.2 des Schlussquerträgers 3 angeordnet ist.

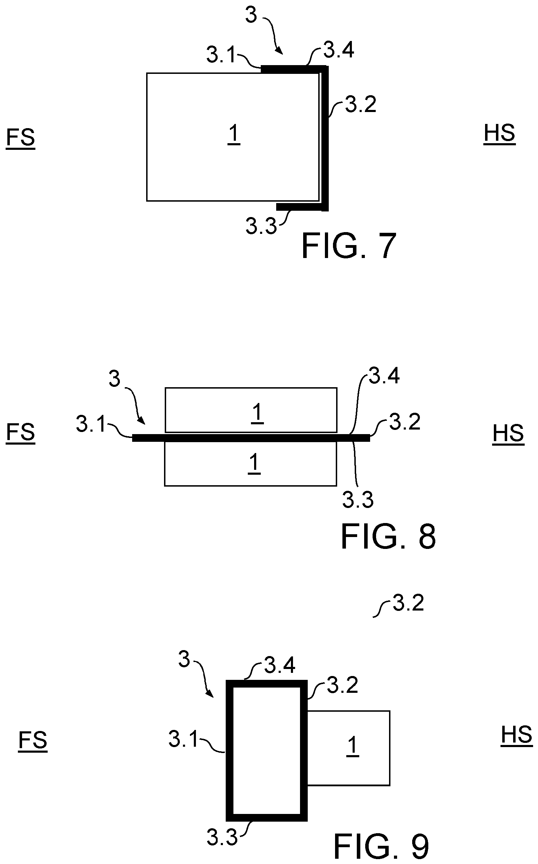

Figur 7 zeigt eine schematische Querschnittsansicht entlang Linie A-A aus Figur 2 eines eine Vorderseite 3.1, eine Hinterseite 3.2, eine Unterseite 3.3 und eine Oberseite 3.4 aufweisenden Schlussquerträgers 3 und eines Aufnahmebehältnisses 1 gemäß einer noch anderen Ausführungsform der Erfindung. Figur 7 zeigt eine Ausführungsform, in der das Aufnahmebehältnis 1 hinter der Hinterachse HA, innerhalb des Schlussquerträgers 3, vor und hinter der Vorderseite 3.1 des Schlussquerträgers 3 und zudem vollständig vor der Hinterseite 3.2. des Schlussquerträgers 3 angeordnet ist.

Figur 8 zeigt eine schematische Querschnittsansicht entlang Linie A-A aus Figur 2 eines eine Vorderseite 3.1, eine Hinterseite 3.2, eine Unterseite 3.3 und eine Oberseite 3.4 aufweisenden Schlussquerträgers 3 und eines Aufnahmebehältnisses 1 gemäß einer anderen Ausführungsform der Erfindung. Figur 8 zeigt eine Ausführungsform, in der das Aufnahmebehältnis 1 hinter der Hinterachse HA, hinter der Vorderseite 3.1. des Schlussquerträgers 3, vollständig vor der Hinterseite 3.2. des Schlussquerträgers 3 und zudem über und unter dem Schlussquerträger 3 angeordnet ist.

Figur 9 zeigt eine schematische Querschnittsansicht entlang Linie A-A aus Figur 2 eines eine Vorderseite 3.1, eine Hinterseite 3.2, eine Unterseite 3.3 und eine Oberseite 3.4 aufweisenden Schlussquerträgers 3 und eines Aufnahmebehältnisses 1 gemäß einer wiederum anderen Ausführungsform der Erfindung. Figur 9 zeigt eine Ausführungsform, in der das Aufnahmebehältnis 1 hinter der Hinterachse HA und vollständig hinter der Hinterseite 3.2. des Schlussquerträgers 3 angeordnet ist.

Insbesondere bei den in Figuren 6 und 9 gezeigten Ausführungsformen ist das Aufnahmebehältnis 1 nach hinten hin schutzfrei exponiert und es besteht die Gefahr, dass bei einem Crash des Nutzfahrzeugs das Aufnahmebehältnis 1 seine aufgenommenen Hybridkomponenten nicht hinreichend schützen kann, weshalb eine Crash-Schutzstruktur 4 vorteilhaft sein kann. Natürlich kann die Crash-Schutzstruktur 4 auch bei Bedarf bei den in den Figuren 5, 7 und 8 gezeigten Ausführungsformen zum Einsatz kommen.

Zu erwähnen ist, dass das Aufnahmebehältnis 1 zur Aufnahme einer Starterbatterie und z. B. einer Hochvoltbatterie dient. Die Hochvoltbatterie ist zweckmäßig eine Hybridbatterie, die als Energiespeicher für einen Hybridantrieb des Nutzfahrzeugs dient.

Außerdem ist zu erwähnen, dass im Rahmen der Erfindung auch der Bauraum hinter der Hinterachse HA und entlang zumindest einer der Längsträgerkonstruktionen 2 für zumindest ein Aufnahmebehältnis 1 genutzt werden kann.

Ferner ist zu erwähnen, dass die Erfindung auch Ausführungsformen mit mehreren, quasi separaten Aufnahmebehältnissen 1 umfasst, die z.B. beabstandet voneinander angeordnet sein können. Z.B. kann ein Aufnahmebehältnis 1 an der einen Längsträgerkonstruktion 2, ein Aufnahmebehältnis 1 an der anderen Längsträgerkonstruktion 2 und alternativ oder ergänzend ein Aufnahmebehältnis 1 am Schlussquerträger 3 angeordnet sein.

## Patentansprüche

1. Rahmentragstruktur (100), vorzugsweise Fahrgestell, für ein Nutzfahrzeug, vorzugsweise Lastkraftwagen, mit
- zumindest einem Aufnahmebehältnis (1) für zumindest eine Nutzfahrzeugkomponente, vorzugsweise zumindest eine Hybridkomponente für das Nutzfahrzeug,
- zwei Längsträgerkonstruktionen (2),
- zumindest einer Hinterachse (HA) für das Nutzfahrzeug, und
- einem Schlussquerträger (3), der vorzugsweise hinter der Hinterachse (HA) angeordnet ist,
wobei
- das Aufnahmebehältnis (1) hinter der Hinterachse (HA) angeordnet ist und eine Starterbatterie aufnimmt,
**dadurch gekennzeichnet, dass**
das Aufnahmebehältnis (1) zumindest abschnittsweise unter dem Schlussquerträger (3), nämlich unter dessen Unterseite (3.3), angeordnet ist, und
das Aufnahmebehältnis (1) zumindest abschnittsweise seitlich außerhalb der zwei Längsträgerkonstruktionen (2) angeordnet ist, und wobei
die Rahmentragstruktur (100) mit einer Crash-Schutzstruktur (4) versehen ist, die das Aufnahmebehältnis (1) vor einem Aufprall schützt, wobei die Crash-Schutzstruktur (4) ein Querträgerelement (4.1) umfasst, das sich in Querrichtung (Q) der Rahmentragstruktur (100) erstreckt, hinter dem Aufnahmebehältnis (1) verläuft und zumindest abschnittsweise unterhalb dem Niveau des Schlussquerträgers (3) angeordnet ist.

2. Rahmentragstruktur (100) nach Anspruch 1, **dadurch gekennzeichnet, dass** das Aufnahmebehältnis (1) zumindest abschnittsweise entlang des Schlussquerträgers (3) angeordnet ist.

3. Rahmentragstruktur (100) nach Anspruch 1 oder 2, **dadurch gekennzeichnet, dass** das Aufnahmebehältnis (1) zumindest abschnittsweise entlang zumindest einer der zwei Längsträgerkonstruktionen (2) angeordnet ist.

4. Rahmentragstruktur (100) nach einem der vorhergehenden Ansprüche, **dadurch gekennzeichnet, dass** das Aufnahmebehältnis (1) zumindest abschnittsweise unter und/oder über dem Schlussquerträger (3) angeordnet ist.

5. Rahmentragstruktur (100) nach einem der vorhergehenden Ansprüche, **dadurch gekennzeichnet, dass** das Aufnahmebehältnis (1) zumindest abschnittsweise vor der Vorderseite (3.1) des Schlussquerträgers (3) oder zumindest abschnittsweise vor der Hinterseite (3.2) des Schlussquerträgers (3) angeordnet ist.

6. Rahmentragstruktur (100) nach einem der vorhergehenden Ansprüche, **dadurch gekennzeichnet, dass** das Aufnahmebehältnis (1) vollständig vor der Vorderseite (3.1) oder vollständig vor der Hinterseite (3.2) des Schlussquerträgers (3) angeordnet ist.

7. Rahmentragstruktur (100) nach einem der vorhergehenden Ansprüche, **dadurch gekennzeichnet, dass** das Aufnahmebehältnis (1) zumindest abschnittsweise innerhalb des Schlussquerträgers (3) angeordnet ist.

8. Rahmentragstruktur (100) nach einem der vorhergehenden Ansprüche, **dadurch gekennzeichnet, dass** die Crash-Schutzstruktur (4) zusätzlich zu dem Querträgerelement (4.1) zwei Seitenelemente umfasst, die als Seitenaufprallschutz für das Aufnahmebehältnis (1) dienen und zusammen mit dem Querträgerelement (4.1) eine im Wesentlichen U-förmige Gestalt bilden.

9. Rahmentragstruktur (100) nach einem der vorhergehenden Ansprüche, **dadurch gekennzeichnet, dass** das Aufnahmebehältnis (1) über ein Dämpfungselement mit dem Schlussquerträger (3) und/oder zumindest einer der zwei Längsträgerkonstruktionen (2) verbunden ist.

10. Rahmentragstruktur (100) nach einem der vorhergehenden Ansprüche, **dadurch gekennzeichnet, dass** das Aufnahmebehältnis (1) an der Unterseite (3.3) des Schlussquerträgers (3) montiert ist.

11. Rahmentragstruktur (100) nach einem der vorhergehenden Ansprüche, **dadurch gekennzeichnet, dass** die zwei Längsträgerkonstruktionen (2) nach hinten verlängert sind, um hinter der Hinterachse (HA) und vor dem Schlussquerträger (3) Bauraum für das Aufnahmebehältnis (1) zu schaffen.

12. Rahmentragstruktur (100) nach einem der vorhergehenden Ansprüche, **dadurch gekennzeichnet, dass** das Aufnahmebehältnis (1) zumindest abschnittsweise seitlich innerhalb der zwei Längsträgerkonstruktionen (2) angeordnet ist.

13. Rahmentragstruktur (100) nach einem der vorhergehenden Ansprüche, **dadurch gekennzeichnet, dass** das Aufnahmebehältnis (1) so ausgebildet und angeordnet ist, dass sein Eigengewicht zu im Wesentlichen gleichen Teilen auf die zwei Längsträgerkonstruktionen (2) übertragen wird.

14. Rahmentragstruktur (100) nach einem der vorhergehenden Ansprüche, **dadurch gekennzeichnet, dass** das Aufnahmebehältnis (1) sich zumindest über die gesamte Längserstreckung des Schlussquerträgers (3) erstreckt.

15. Rahmentragstruktur (100) nach einem der vorhergehenden Ansprüche, **dadurch gekennzeichnet, dass** der Schlussquerträger (3) mit zwei Seitenarmkonstruktionen (5) versehen ist, die mit den zwei Längsträgerkonstruktionen (2) verbunden sind und als Verlängerung der Längsträgerkonstruktionen (2) wirken, und der Schlussquerträger (3), die Seitenarmkonstruktionen (5) und die Crash-Schutzstruktur (4) eine Baueinheit bilden.

16. Nutzfahrzeug, vorzugsweise Lastkraftwagen, insbesondere Sattelzugmaschine, mit einer Rahmentragstruktur (100) nach einem der vorhergehenden Ansprüche.

## Claims

1. A frame load-bearing structure (100), preferably a chassis, for a commercial vehicle, preferably a lorry, having
- at least one receiving container (1) for at least one commercial vehicle component, preferably at least one hybrid component for the commercial vehicle,
- two longitudinal carrier structures (2),
- at least one rear axle (HA) for the commercial vehicle, and
- an end crossmember (3) which is preferably arranged behind the rear axle (HA),
wherein
- the receiving container (1) is arranged behind the rear axle (HA) and receives a starter battery,
**characterized in that**
the receiving container (1) is arranged at least in sections below the end crossmember (3), namely below its underside (3.3), and
the receiving container (1) is arranged at least in sections laterally outside the two longitudinal carrier structures (2), and wherein
the frame load-bearing structure (100) is provided with a crash protection structure (4) which protects the receiving container (1) against an impact, wherein the crash protection structure (4) comprises a crossmember element (4.1) which extends in the transverse direction (Q) of the frame load-bearing structure (100), runs behind the receiving container (1), and is arranged at least in sections below the level of the end crossmember (3) .

2. The frame load-bearing structure (100) according to Claim 1, **characterized in that** the receiving container (1) is arranged at least in sections along the end crossmember (3).

3. The frame load-bearing structure (100) according to Claim 1 or 2, **characterized in that** the receiving container (1) is arranged at least in sections along at least one of the two longitudinal carrier structures (2).

4. The frame load-bearing structure (100) according to one of the preceding claims, **characterized in that** the receiving container (1) is arranged at least in sections below and/or above the end crossmember (3).

5. The frame load-bearing structure (100) according to one of the preceding claims, **characterized in that** the receiving container (1) is arranged at least in sections in front of the front side (3.1) of the end crossmember (3) or at least in sections in front of the rear side (3.2) of the end crossmember (3).

6. The frame load-bearing structure (100) according to one of the preceding claims, **characterized in that** the receiving container (1) is arranged completely in front of the front side (3.1) or completely in front of the rear side (3.2) of the end crossmember (3).

7. The frame load-bearing structure (100) according to one of the preceding claims, **characterized in that** the receiving container (1) is arranged at least in sections inside the end crossmember (3).

8. The frame load-bearing structure (100) according to one of the preceding claims, **characterized in that**, in addition to the crossmember element (4.1), the crash protection structure (4) comprises two side elements which serve as a side impact protection means for the receiving container (1) and, together with the crossmember element (4.1), form a substantially U-shaped form.

9. The frame load-bearing structure (100) according to one of the preceding claims, **characterized in that** the receiving container (1) is connected via a damping element to the end crossmember (3) and/or at least one of the two longitudinal carrier structures (2).

10. The frame load-bearing structure (100) according to one of the preceding claims, **characterized in that** the receiving container (1) is mounted on the underside (3.3) of the end crossmember (3).

11. The frame load-bearing structure (100) according to one of the preceding claims, **characterized in that** the two longitudinal carrier structures (2) are extended towards the rear, in order to provide installation space for the receiving container (1) behind the rear axle (HA) and in front of the end crossmember (3).

12. The frame load-bearing structure (100) according to one of the preceding claims, **characterized in that** the receiving container (1) is arranged at least in sections laterally inside the two longitudinal carrier structures (2) .

13. The frame load-bearing structure (100) according to one of the preceding claims, **characterized in that** the receiving container (1) is configured and arranged in such a way that its dead weight is transferred substantially in equal parts to the two longitudinal carrier structures (2).

14. The frame load-bearing structure (100) according to one of the preceding claims, **characterized in that** the receiving container (1) extends at least over the entire longitudinal extent of the end crossmember (3).

15. The frame load-bearing structure (100) according to one of the preceding claims, **characterized in that** the end crossmember (3) is provided with two side arm structures (5) which are connected to the two longitudinal carrier structures (2) and act as an extension of the longitudinal carrier structures (2), and the end crossmember (3), the side arm structures (5) and the crash protection structure (4) form one structural unit.

16. A commercial vehicle, preferably a lorry, in particular a semi-trailer tractor, having a frame load-bearing structure (100) according to one of the preceding claims.

## Revendications

1. Structure porteuse de cadre (100), de préférence châssis, pour un véhicule utilitaire, de préférence un camion, comprenant
- au moins un réceptacle (1) pour au moins un composant de véhicule utilitaire, de préférence au moins un composant hybride pour le véhicule utilitaire,
- deux constructions de longerons (2),
- au moins un essieu arrière (HA) pour le véhicule utilitaire, et
- une traverse terminale (3) qui est disposée de préférence derrière l'essieu arrière (HA)
dans laquelle
- le réceptacle (1) est disposé derrière l'essieu arrière (HA) et reçoit une batterie de démarrage,
**caractérisée en ce que**
le réceptacle (1) est disposé au moins par endroits sous la traverse terminale (3), notamment sous la face inférieure (3.3) de celle-ci, et
le réceptacle (1) est disposé au moins par endroits latéralement à l'extérieur des deux constructions de longerons (2), et dans lequel
la structure porteuse de cadre (100) est munie d'un dispositif anticollision (4) protégeant le réceptacle (1) d'un choc, le dispositif anticollision (4) comprenant un élément de traverse (4.1) qui s'étend dans la direction transversale (Q) de la structure porteuse de cadre (100), passe derrière le réceptacle (1) et est disposé au moins par endroits au-dessous du niveau de la traverse terminale (3).

2. Structure porteuse de cadre (100) selon la revendication 1, **caractérisée en ce que** le réceptacle (1) est disposé au moins par endroits le long de la traverse terminale (3).

3. Structure porteuse de cadre (100) selon la revendication 1 ou 2, **caractérisée en ce que** le réceptacle (1) est disposé au moins par endroits le long d'au moins l'une des deux constructions de longerons (2).

4. Structure porteuse de cadre (100) selon l'une quelconque des revendications précédentes, **caractérisée en ce que** le réceptacle (1) est disposé au moins par endroits sous et/ou sur la traverse terminale (3).

5. Structure porteuse de cadre (100) selon l'une quelconque des revendications précédentes, **caractérisée en ce que** le réceptacle (1) est disposé au moins par endroits devant la face avant (3.1) de la traverse terminale (3) ou au moins par endroits devant la face arrière (3.2) de la traverse terminale (3).

6. Structure porteuse de cadre (100) selon l'une quelconque des revendications précédentes, **caractérisée en ce que** le réceptacle (1) est disposé entièrement devant la face avant (3.1) ou entièrement devant la face arrière (3.2) de la traverse terminale (3).

7. Structure porteuse de cadre (100) selon l'une quelconque des revendications précédentes, **caractérisée en ce que** le réceptacle (1) est disposé au moins par endroits à l'intérieur de la traverse terminale (3).

8. Structure porteuse de cadre (100) selon l'une quelconque des revendications précédentes, **caractérisée en ce que** le dispositif anticollision (4) comprend en plus de l'élément de traverse (4.1) deux éléments latéraux servant de dispositif anticollision latéral pour le réceptacle (1) et formant avec l'élément de traverse (4.1) une configuration substantiellement en forme de U.

9. Structure porteuse de cadre (100) selon l'une quelconque des revendications précédentes, **caractérisée en ce que** le réceptacle (1) est relié par l'intermédiaire d'un élément d'amortissement à la traverse terminale (3) et/ou à au moins l'une des deux constructions de longerons (2).

10. Structure porteuse de cadre (100) selon l'une quelconque des revendications précédentes, **caractérisée en ce que** le réceptacle (1) est monté sur la face inférieure (3.3) de la traverse terminale (3).

11. Structure porteuse de cadre (100) selon l'une quelconque des revendications précédentes, **caractérisée en ce que** les deux constructions de longerons (2) sont prolongées vers l'arrière afin de ménager un espace de montage pour le réceptacle (1) derrière l'essieu arrière (HA) et devant la traverse terminale (3).

12. Structure porteuse de cadre (100) selon l'une quelconque des revendications précédentes, **caractérisée en ce que** le réceptacle (1) est disposé au moins par endroits latéralement à l'intérieur des deux constructions de longerons (2).

13. Structure porteuse de cadre (100) selon l'une quelconque des revendications précédentes, **caractérisée en ce que** le réceptacle (1) est réalisé et disposé de telle sorte que son poids propre soit réparti substantiellement à parts égales sur les deux constructions de longerons (2).

14. Structure porteuse de cadre (100) selon l'une quelconque des revendications précédentes, **caractérisée en ce que** le réceptacle (1) s'étend au moins sur toute l'étendue longitudinale de la traverse terminale (3).

15. Structure porteuse de cadre (100) selon l'une quelconque des revendications précédentes, **caractérisée en ce que** la traverse terminale (3) est munie de deux constructions de bras latéraux (5) qui sont reliées aux deux constructions de longerons (2) et servent de prolongement aux constructions de longerons (2), et la traverse terminale (3), les constructions de bras latéraux (5) et le dispositif anticollision (4) constituent une unité modulaire.

16. Véhicule utilitaire, de préférence camion, en particulier tracteur de semi-remorque avec une structure porteuse de cadre (100) selon l'une quelconque des revendications précédentes.
